# FASCICULE DE BREVET EUROPEEN

(11) **EP 2 684 426 B1**
(45) Date de publication et mention de la délivrance du brevet: **22.04.2015**
(21) Numéro de dépôt: 12711761.2
(22) Date de dépôt: 06.03.2012
(51) Int. Cl.: H05B 37/02, H05B 33/08, F21L 4/00, F21V 14/00

(54) **LAMPE LED DOTEE D'UN DISPOSITIF DE FAISCEAU A GEOMETRIE VARIABLE**
LED-LAMPE MIT EINER STRAHLVORRICHTUNG MIT VERÄNDERLICHER GEOMETRIE
LED LAMP PROVIDED WITH A VARIABLE-GEOMETRY BEAM DEVICE

(30) Priorité: 07.03.2011 EP 11368004; 12.12.2011 FR 1103795; 05.03.2012 FR 1200651
(43) Date de publication de la demande: 15.01.2014
(73) Titulaire: Zedel S.A., 38920 Crolles (FR)
(72) Inventeur: BOUFFAY, Boris, F-38660 Saint Bernard du Touvet (FR); MAURICE, Alain, F-38660 Saint Hilaire du Touvet (FR)
(74) Mandataire: Schuffenecker, Thierry
(86) Numéro de dépôt international: PCT/EP2012/000984
(87) Numéro de publication internationale: WO 2012/119756

(56) Documents cités:
- EP-A1- 2 075 630
- NO-A- 20 024 391

## Description

### Domaine technique

La présente invention concerne les lampes dotées de diodes LED, et notamment une lampe frontale à LED comportant un dispositif de faisceau à géométrie variable.

### Etat de la technique

Les lampes frontales sont utilisées dans un grand nombre d'activités tant professionnelles, que sportives ou ludiques.

D'une manière générale, ces lampes sont destinées à permettre un éclairage de type "main libre" efficace, confortable et assurant une longévité maximale de la batterie.

On cherche depuis plusieurs années à accroître les fonctionnalités des nouvelles lampes frontales.

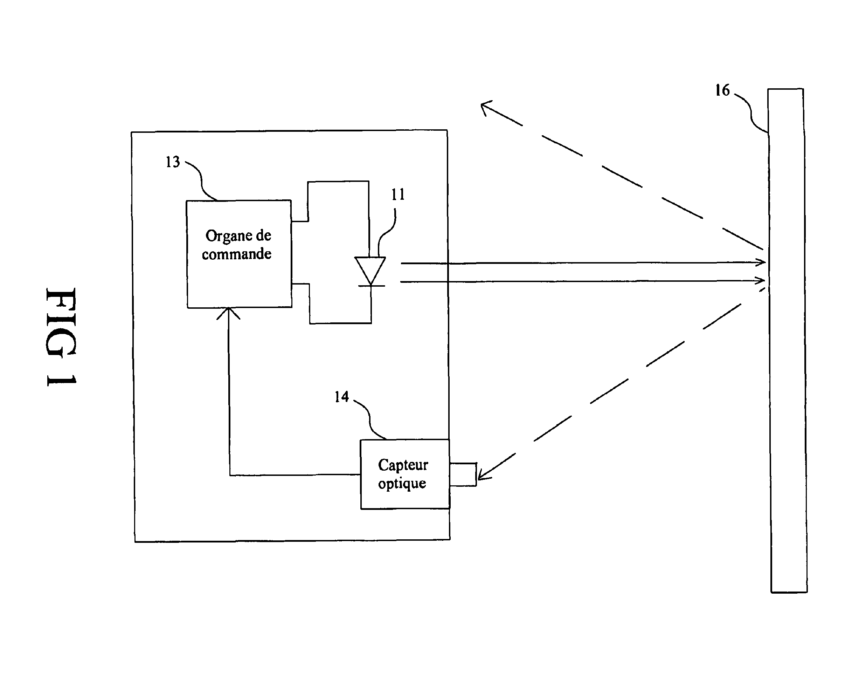

La demanderesse de la présente demande de brevet a ainsi introduit le concept de lampe dite "dynamique", introduisant une régulation de la puissance d'émission lumineuse de la lampe, contrairement à un mode dit "statique" basée sur une puissance constante. La demande de brevet FR2930706 en date du 24 Avril 2008 décrit une lampe d'éclairage auto-régulée utilisant un capteur de la lumière réfléchie par un objet éclairé par la lampe pour la régulation de l'intensité lumineuse. La figure 1 illustre une telle lampe qui comporte un capteur optique 14 logé dans le boîtier au voisinage de la diode électroluminescente LED 11 pour délivrer un signal représentatif de la lumière réfléchie par la surface d' un objet 16 éclairé, et transmettre ledit signal à une deuxième entrée d' un organe de commande 13 pour réguler automatiquement la puissance de la LED en fonction d'un seuil prédéterminé. De cette manière, une régulation automatique du faisceau lumineux émis par la lampe est effectuée sans action manuelle pour adapter l'éclairage à l'environnement, tout en gérant la consommation en énergie.

La présente se propose d'accroître significativement les fonctionnalités de ce type de lampe, en proposant notamment un faisceau de géométrie variable.

La demande de brevet EP2075630 décrit un dispositif d'illumination, notamment pour un téléphone mobile doté d'un flash, comportant une source lumineuse générant un rayant lumineux traversant un dispositif optique commandé électriquement pour la génération d'un faisceau lumineux variable.

US2005/0099798 A1 montre une lampe frontale avec adaptation dynamique de l'intensité du faisceau lumineux.

### Résumé de l'invention

C'est un but de la présente invention que de réaliser une lampe frontale dotée d'un faisceau à géométrie variable permettant de tirer pleinement parti des performances de la lampe dynamique, notamment en matière de longévité de la batterie.

C'est un autre but de la présente invention que de réaliser une lampe dotée d'un faisceau à géométrie variable permettant d'accroître le caractère pratique de la lampe, notamment en l'adaptant à de multiples usages et profils spécifiques.

C'est un autre but de la présente invention consiste à réaliser une lampe frontale dotée de fonctionnalités nouvelles utilisables dans un grand nombre d'applications.

Ces buts sont atteints grâce à la réalisation d'une lampe, telle qu'une lampe frontale, défini dans la revendication 1, comportant:
- une source lumineuse dotée d'une ou plusieurs diodes de type LED;
- de moyens permettant de commander la géométrie du faisceau lumineux de cette source lumineuse en réponse à une information ou signal de commande;
- d'un module de commande destiné à générer ladite information ou ledit signal de commande.

La lampe est caractérisé en ce que module de commande comporte un capteur d'image générant au moins une image de la zone éclairée par la source lumineuse et des moyens de traitement e l'image dans le but de générer l'information ou le signal de commande de la géométrie du faisceau lumineux.

Dans un mode de réalisation spécifique, la source lumineuse comporte une unité d'affichage comportant au moins deux diodes LED dotées chacune d'un système optique focale propre et dont l'alimentation en courant est commandée par l'information ou le signal généré(e) par le traitement d'images.

Alternativement, la source lumineuse pourra comporter une ou plusieurs diodes LED associées à un système optique pouvant être est commandée par l'information ou le signal généré(e) par le traitement d'images.

Alternativement, la source lumineuse pourra comporter au moins une première LED et une seconde LED légèrement désaxées l'une par rapport à l'autre et dont les courants d'alimentation respectifs sont fonctions de l'information ou du signal de commande généré(e) par le traitement d'images.

Dans un mode de réalisation particulier, la lampe comporte un capteur additionnel, destiné à détecter une partie de la lumière réfléchie par le sujet exposé au faisceau lumineux de manière à permettre une régulation simplifiée de la puissance et de la géométrie du faisceau lumineux à partir de l'information générée par le capteur additionnel, conjointement avec le traitement d'images.

Optionnellement, la lampe comporte également des moyens de détermination de la vitesse, ledit processeur d'images utilisant conjointement le traitement d'images et lesdits moyens de détermination de la vitesse captée de manière à commander la géométrie du faisceau lumineux.

Dans un mode de réalisation particulier, les moyens de traitement déterminent une zone spécifique d'asservissement (ZSA) au sein de l'image, et faisant l'objet d'un traitement d'images de manière à générer l'information ou le signal de commande de la géométrie du faisceau lumineux.

Dans un mode de réalisation particulier, les moyens de traitement comportent un processeur d'images effectuant un calcul de la luminosité moyenne des pixels représentatifs de ladite image à des fins de comparaison à un seuil de manière à générer l'information ou le signal de commande de la géométrie du faisceau lumineux.

Dans un mode de réalisation particulier, le processeur d'images effectue une analyse de contraste sur ladite image dans le but d'une détection de brouillard, de buée et/ou de particules de fumée de manière à générer l'information ou le signal de commande de la géométrie du faisceau lumineux.

De préférence, les moyens de traitement comporte des moyens de configuration de la lampe, notamment suivant un ou plusieurs profils prédéterminés.

La lampe selon l'invention est particulièrement adaptée à la réalisation d'une lampe frontale pouvant servir bien des applications: escalades, randonnées, etc...

### Description des figures

D'autres caractéristiques, but et avantages de l'invention apparaîtront à la lecture de la description et des dessins ci-après, donnés uniquement à titre d'exemples non limitatifs. Sur les dessins annexés :
La figure 1 illustre un exemple d'une lampe connue, dite "dynamique", comportant une régulation de la consommation électrique.
La figure 2 illustre un premier mode de réalisation d'une lampe conforme à la présente invention, permettant de produire un faisceau à géométrie variable.
La figure 3 illustre un second mode de réalisation d'une lampe dotée d'un faisceau à géométrie variable.
La figure 4 illustre un troisième mode de réalisation d'une lampe dotée d'un faisceau à géométrie variable.
La figure 5 illustre une architecture générale du troisième mode de réalisation de la figure 3.
La figure 6 illustre un premier mode de réalisation d'un procédé de commande du faisceau lumineux basé sur l'image entière capturée par le capteur d'images.
La figure 7 Illustre un second mode de réalisation d'un procédé de commande du faisceau lumineux basé sur une zone spécifique d'asservissement de l'image (ZSA).
Les figures 8 et 9 illustrent deux modes de réalisation d'un procédé de traitement basé sur un calcul de luminosité de l'image traitée par le processeur d'images.
Les figures 10 et 11 illustrent deux modes de réalisation d'un procédé de traitement basé sur un calcul de contraste de l'image traitée par le processeur d'images.
Les figures 12 et 13 illustrent respectivement un tel procédé de commande de la lampe, respectivement utilisables dans deux profils différents.
La figure 14 illustre une variante du mode de réalisation de la figure 11.
Les figures 15a et 15b illustrent un mode de réalisation particulier permettant la détection de particules de brouillard et/ou de fumée.

### Description des modes de réalisation préférés

Les exemples qui vont être décrits à présent sont particulièrement adaptés à la réalisation d'une lampe d'éclairage dotée de diodes LED de puissance, et notamment une lampe frontale.

Bien évidemment, il ne s'agit là que d'exemples non limitatifs et un homme du métier pourra adapter l'invention à d'autres dispositifs lumineux pour en accroître la sécurité de fonctionnement.

### A. Un premier mode de réalisation par combinaison de LEDs dotées de focales propres

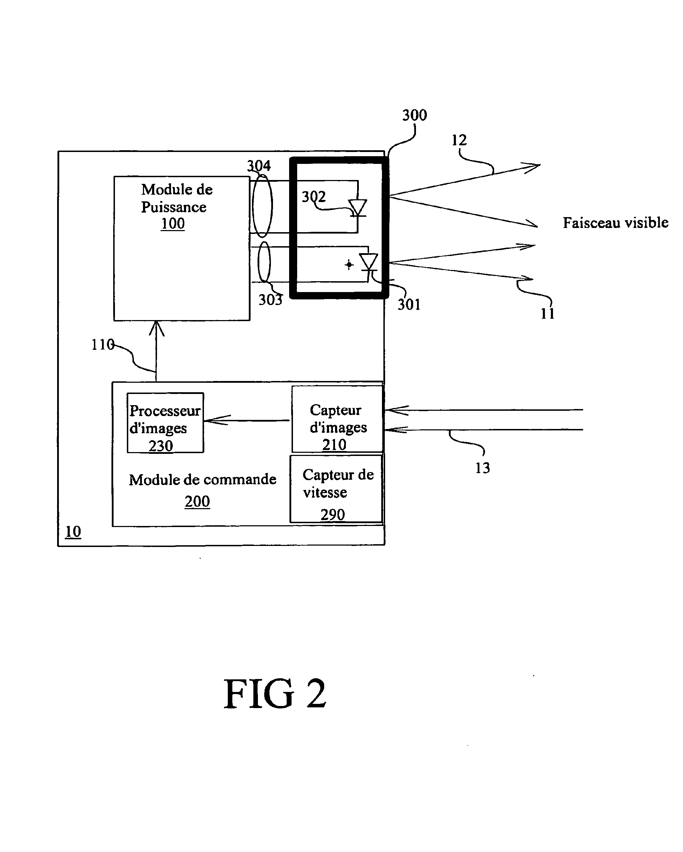

La **figure 2** illustre l'architecture générale d'un premier mode de réalisation d'une lampe 10 - supposée frontale - comportant des moyens sophistiqués de commande de l'intensité lumineuse. La lampe 10 comprend un module de puissance 100 associé à un module de commande 200 et une unité d'éclairage 300 comportant une pluralité de diodes électroluminescentes DEL 302 (ou LED dans la littérature anglo-saxonne) dotées chacune d'un système focal propre.

Dans l'exemple de la figure 2, l'on a représenté, dans un souci de simplification, un ensemble de deux diodes 301 et 302, respectivement dotées de leur conducteurs d'alimentations 303 et 304 connectés au module de puissance. Plus généralement, l'on pourra, pour augmenter la luminosité de la lampe, prévoir plusieurs diodes au sein d'un même système optique focal, voire même multiplier le nombre de systèmes optiques afin d'accroître les possibilités d'utilisation de la lampe.

Dans un mode de réalisation spécifique, l'alimentation en courant des diodes LEDs 301 et 302, respectivement via leurs conducteurs d'alimentation 303 et 304, est effectuée sous la commande d'une information ou d'un signal de commande 110 généré par le module de commande 200.

Le module de puissance 100 comporte spécifiquement tous les composants que l'on rencontre conventionnellement dans une lampe d'éclairage à LEDs pour la production d'un faisceau lumineux de forte intensité, et en général basée sur la Modulation en Largeur d'Impulsion MLI (ou *Pulse Width Modulation* dans la littérature anglo-saxonne), bien connue d'un homme du métier et similaire à celle que l'on rencontre dans les circuits audio de classe D. Cette modulation MLI est commandée au moyen du signal de commande 110. D'une manière générale, l'on notera que le terme "signal" mentionné précédemment renvoie à une grandeur électrique - courant ou tension - permettant de provoquer la commande du module de puissance, et notamment la modulation MLI servant à alimenter en courant la diode LED 302. Il ne s'agit ici que d'un mode particulier de réalisation, étant entendu qu'il sera possible de substituer au "signal de commande 110" toute "information de commande" , par exemple une information logique stockée dans un registre et transmise par tout moyen approprié au module de commande 100 dans le but de commander la puissance d'émission du faisceau lumineux. Dans un mode de réalisation particulier, l'on pourra même envisager que les deux modules de commande et de puissance soient intégrés dans un même module ou circuit intégré.

Un homme du métier comprendra donc aisément que lorsque l'on se réfère à un "signal de commande 110", l'on englobe indistinctement les réalisations recourant à une grandeur électrique de commande - courant ou tension - ainsi que les réalisations dans lesquelles la commande est réalisée au moyen d'une information logique transmise au sein du circuit de puissance. Pour cette raison, l'on parlera ci-après indistinctement de *signal* ou *d'information* de commande.

D'une manière générale, les composants qui composent le module de puissance 100 - commutateurs et circuits - sont bien connus d'un homme du métier et l'exposé sera délibérément allégé à cet égard dans une souci de concision. De même, le lecteur sera renvoyé aux ouvrages généraux traitant des divers aspects de la modulation MLI (ou PWM).

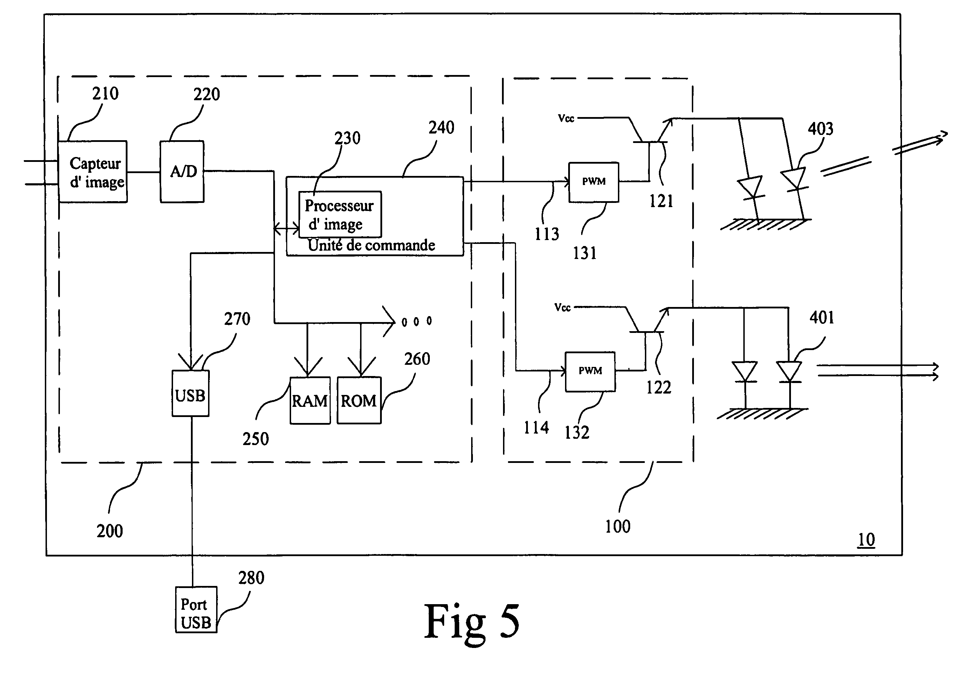

Un exemple plus spécifique de module de puissance sera décrit plus loin en relation avec la figure 5. En revenant à la figure 2, l'on voit que le module de commande 200 comporte un capteur d'image 210 dont l'axe 13 est parallèle à l'axe de la LED 302 et fournissant des images à un processeur d'images 230 capable d'opérer un traitement sur ces images ainsi que, dans un mode de réalisation particulier et optionnel, de moyens de détermination de la vitesse, tel qu'un capteur de vitesse 290. , voire un circuit récepteur de type Global Positioning System (GPS) capable de générer une information relative à la position de la lampe ainsi qu'à sa vitesse.

Suivant le mode de réalisation de la figure 2, les images captées par le capteur d'images 210 et optionnellement l'information représentative de la vitesse captée par le capteur 290 servent à générer, grâce au traitement effectué par le processeur d'images 230 au sein du module de commande 200, une information ou un signal de commande 110 à destination du module de puissance 100 pour la commande de l'alimentation en courant des LEDs 301 ou 302 et, par conséquent, la commande de la focale du faisceau lumineux généré par la lampe.

Il devient ainsi possible, au moyen d'un traitement logiciel réalisé sur l'image captée par le capteur 210, de venir commander la géométrie du faisceau lumineux produit par la lampe frontale, et notamment la génération d'un cône d'éclairage qui pourra être plus ou moins large selon la situation particulière analysée par le processeur d'images.

Dans certaines situations, le processeur d'image 230 pourra ainsi décider automatiquement la commande d'un cône d'éclairage large ou plus étroit, comme cela est illustré avec les faisceau 11 et 12 de la figure 2.

D'une manière générale la commandes 110 pourra résulter de l'application de critères indépendants ou de plusieurs critères appliqués conjointement.

Dans un mode de réalisation particulier, l'information de vitesse pourra être utilisée de manière simple pour commander la géométrie du faisceau - par exemple de manière à accroître la vision "au loin" du porteur de la lampe lorsque le détecteur détecte une situation de mouvement, comme par exemple lorsque le porteur de la lampe court ou est en déplacement rapide. De la même manière, le module de commande 100 pourra comporter un capteur supplémentaire - ou mettre en oeuvre un algorithme spécifique - permettant de déterminer que le porteur de la lampe est dans une situation de "montée" ou de "descente" de façon à commander de façon adéquate la géométrie du faisceau lumineux dans la situation de "descente" d'une pente afin d'accroître les conditions de visibilité et sa sécurité.

Alternativement, la commande spécifique de la focale associée au faisceau lumineux pourra résulter de la détection d'un accroissement de lumière générée par la LED, elle-même résultant d'un signal de commande 110 dérivée d'un traitement de l'image captée par le capteur 210, et correspondant à une situation rendant opportune la sélection d'une LEDs spécifique et de son système optique focal associé.

### B. Un second mode de réalisation basé sur un système optique commandable

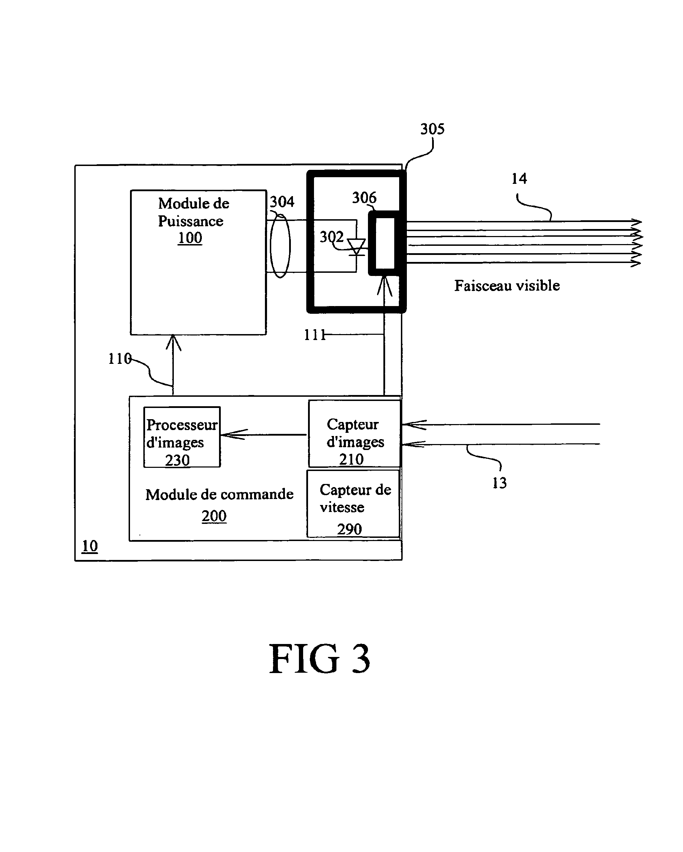

L'on décrit à présent, en référence à la **figure 3****,** un second mode de réalisation dans lequel l'on a substitué, au bloc 300 comportant plusieurs optiques focales, , un nouvelle unité d'éclairage 305 comportant un ensemble de diodes LEDs d'éclairage associées à un système optique commun 306, commandable via un signal de commande 111 pour la commande de la géométrie du faisceau lumineux.

Les éléments apparents dans la figure 2 du second mode de réalisation qui sont inchangés par rapport au du premier mode de réalisation conservent leur référence numérique.

L'on constate donc, dans ce second mode de réalisation, que le module de commande génère à présent deux informations de commande: une première information véhiculée par le signal 110 à destination du module de puissance 100 destinée à la commande de l'alimentation en courant de la diode 302 (via les conducteurs d'alimentation 304) et une seconde information véhiculée par le signal 111 destinée au système optique 306 commandable permettant de commander la géométrie du faisceau, tel que par exemple l'effet de zoom associé à celui-ci. Pour la réalisation du module 306, on pourra envisager tout type de système présentant une optique commandable, en utilisant notamment les touts derniers développements de la micro-électronique tels que les micro-miroirs MEMS.

C'est à partir d'un traitement d'images, similaire à celui mis en oeuvre dans le premier mode de réalisation, que l'on vient à présent commander conjointement les signaux de commande 110 et 111 de manière à générer un faisceau lumineux 14 présentant la luminosité et les caractéristiques géométriques désirées.

On pourra bien évidemment créer de cette manière un effet de "zoom" commandé automatiquement par le signal de commande 111, mais plus généralement tout effet géométrique sur le faisceau lumineux.

La lampe dotée d'un tel dispositif devient particulièrement fonctionnelle, comme on le verra ci-après avec les exemples décrits de traitement d'image.

Mais les possibilités de commande de la géométrie du faisceau lumineux ne s'épuisent certainement pas avec ce second mode de réalisation, comme on va le voir à présent.

### C. Description d'un troisième mode de réalisation permettant de commander des LEDs ayant des faisceau distincts

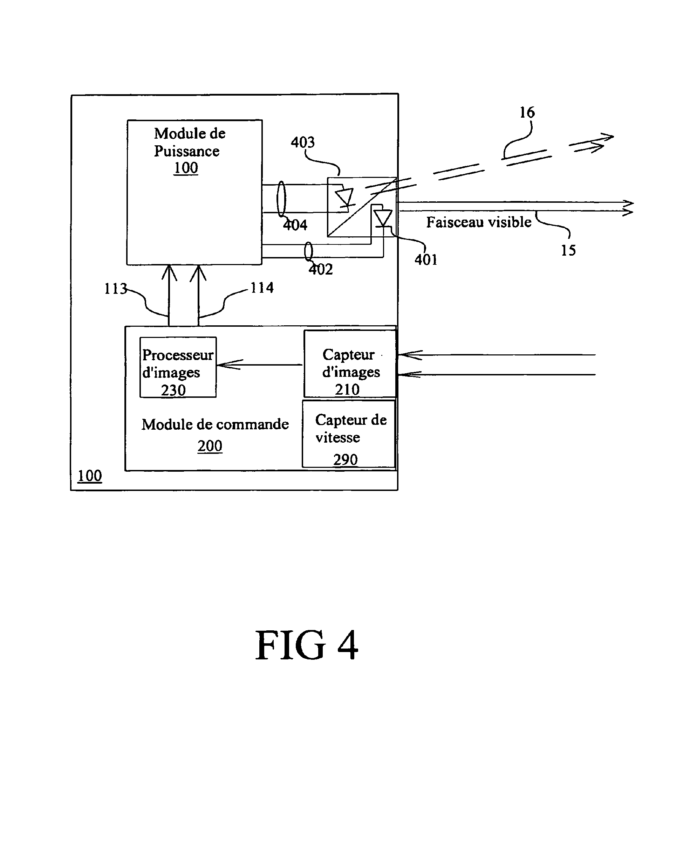

L'on décrit à présent, en référence à la figure 4, un troisième mode de réalisation dans lequel on a substitué, à l'unité 300 du premier mode de réalisation, un jeu de deux diodes ou séries de diodes LEDs présentant des axes légèrement différents. Comme on le voit dans la figure, un premier jeu de diodes (seule une seule diode LED 401 étant illustrée) permet de générer un premier faisceau suivant l'axe 15, tandis qu'un second jeu de diodes (seule une seule diode LED 403 étant illustrée) permet de générer le second faisceau suivant l'axe 16. Les deux séries de diodes 401-403 sont alimentées au moyen du module de puissance 100, respectivement via les conducteurs 402 et 404, eux également commandé par le module de commande 100.

Si la figure 4 illustre un mode de réalisation ne comportant que deux séries de diodes et par là, deux axes 15 et 16 distincts, il est clair qu'un homme du métier pourra adapter l'invention de manière à produire un nombre de faisceaux lumineux supérieurs à deux.

Dans le mode de réalisation de la figure 4, l'on observe que le module de commande 200 génère deux informations ou signaux de commandes, respectivement 113 et 114 , qui sont destinées à venir commander la puissance émises par les séries de LED qui leur correspondent, ie les LED 401 et 403.

A nouveau, comme dans les deux premiers modes de réalisation décrits précédemment, c'est un traitement d'images effectué par le processeur d'images 230, éventuellement conjointement avec l'information de vitesse déterminée par le capteur 290, qui permet de générer les informations ou signaux de commande 113 et 114.

A titre d'illustration, le mode de réalisation de la figure 4 est illustré plus en détail dans la figure 5, où l'on voit que le module de puissance 100 comporte une batterie (non représentée sur la figure), laquelle génère une tension d'alimentation Vcc, et deux commutateurs de puissance, respectivement 121 et 122, permettant d'alimenter en courant les diodes LED 403 et 401 respectivement et respectivement commandées par les circuits 131 et 132, respectivement, mettant en oeuvre la modulation MLI ou PWM. Les commutateurs 121 et 122 sont par exemple de type à semiconducteur tel qu'un transistor bipolaire, un transistor FET (*Field Effect Transistor) ou MOS (Metal Oxyde Semiconductor)* ou MOSFET.

Les deux circuits 121 et 122 sont respectivement commandés par les informations ou les signaux de commandes 113 et 114 générés par une unité de commande 240 intégrée au sein du module de commande 100.

Il ne s'agit ici que d'un mode de réalisation, et un homme du métier pourra clairement utiliser d'autres exemples d'architecture, et notamment en regroupant les deux circuits 121 et 122 au sein d'un même circuit électronique.

Toujours en référence à la figure 4, l'unité de commande 240 intègre un processeur de traitement d'images 230 communiquant via des bus d'adresses, de données et de commande conventionnels avec de la mémoire RAM 250, de la mémoire ROM ou EEPROM etc... 260.

A titre d'illustration, le module de capture d'image 210 qui est représenté dans la figure 2 est un capteur analogique, tel que par exemple un module vidéo ou une caméra analogique, doté de son système optique, et associé à un convertisseur analogique/numérique 220 permettant la conversion des signaux analogiques générés par le capteur d' image 210 en une information numérique qui pourra ensuite être rendue accessible au processeur d'image 230 via les bus de données, d'adresses etc...

Dans un mode de réalisation particulier, l'on pourra opter d'emblée pour une structure complètement numérique et substituer à l'ensemble 210-220 un capteur numérique, tel qu'un capteur CCD (*Charge Coupled Device* dans la littérature anglo-saxonne) bien connu dans le domaine de la photographie numérique. L'on disposera alors directement d'une image pixelisée, par exemple de dimension 640x 480 pixels. Chacun des pixel I(x,y) se verra affectée une valeur représentative de la luminosité de l'image, voire ses composantes de couleurs.

L'on pourra également envisager de recourir en un unique circuit intégré intégrant les deux fonctions de capture d'images et de traitement des images capturées de manière à permettre une miniaturisation adéquate de la réalisation.

Dans un mode de réalisation préféré, le capteur d'image 210 présente un axe sensiblement parallèle à l'axe des diodes LEDs en sorte que l'image, saisie par le capteur 210, correspondra à la zone éclairée par ces dernières.

Dans un autre mode de réalisation, un port USB 280 est accessible via un module USB 270 inclus dans l'unité de commande et connecté au bus, permettant l'échange de données suivant le standard USB. Particulièrement, l'interface USB permettra comme on le verra ci-après, le stockage de paramètres de réglage et de profils au sein de la lampe.

De cette manière, l'unité de commande peut communiquer avec un dispositif de traitement de données tel qu'un ordinateur, un ordinateur portable, une tablette tactile, un assistant personnel et voire même un téléphone intelligent (*Smartphone* suivant la littérature anglo-saxonne).

Il est à noter que le port USB n'est qu'un exemple illustratif d'un moyen de communication entre la lampe et un ordinateur, et qu'un homme du métier pourra envisager tout autre moyen de communication, notamment sans fil (*bluetooth, wifi etc*...). Dans un mode de réalisation particulier, la lampe frontale disposera même de sa propre adresse IP (Internet Protocol) de manière à pouvoir être aisément configurée, par exemple au moyen d'un serveur web dédié.

Une telle communication est particulièrement avantageuse notamment pour l'échange de données de configuration, tels que des « profils » qui permettent de venir stocker ou sélectionner, en tant que de besoin, des données de réglage de la lampe en fonction de son utilisation souhaitée par son propriétaire, et notamment pour mettre en oeuvre les exemples de diagrammes fonctionnels qui seront décrits ci-après. Alternativement ou cumulativement, les "profils" permettent, comme on le verra ci-après, de venir activer des procédures ou modes spécifiques de fonctionnement, notamment les modes statiques (débrayage de la régulation et du pivotement du faisceau lumineux) ou dynamique (activation de la régulation).

L'on décrit à présent plus spécifiquement le fonctionnement de l'architecture présentée précédemment de manière à permettre une régulation particulièrement opportune de la puissance d'émission des LEDs et la commande de pivotement du faisceau lumineux.

En effet, grâce à la capture et au traitement des images saisies par le capteur d'image, il est à présent possible de commander le faisceau lumineux de la lampe à partir du traitement d'images effectué. Plus spécifiquement, l'on pourra venir combiner le traitement d'images à une information représentative de la vitesse de manière à affiner la commande du faisceau.

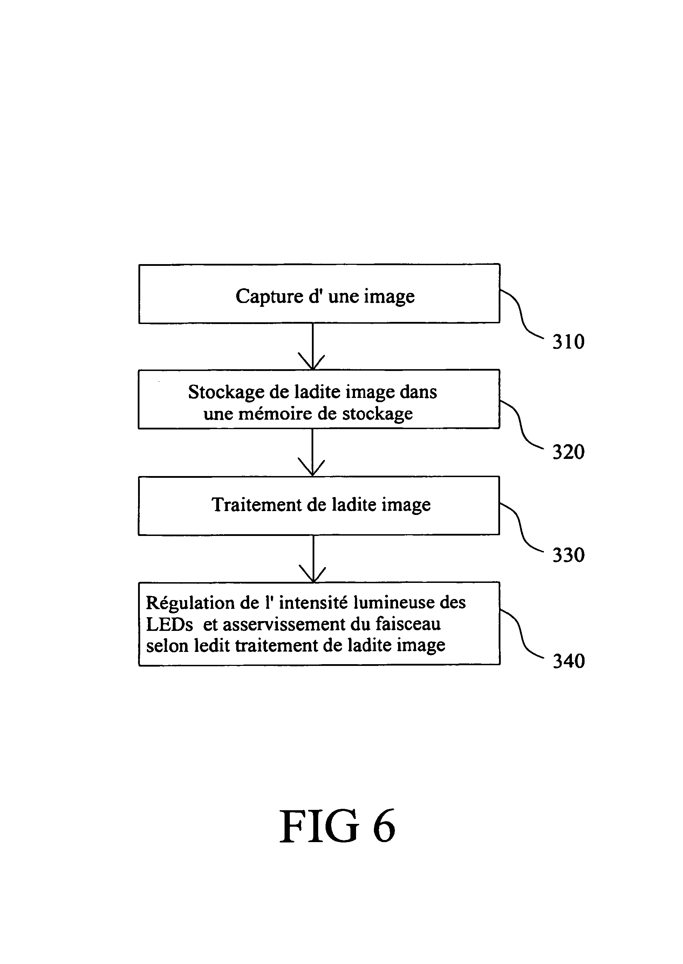

Un mode de réalisation du procédé est illustré plus spécifiquement dans la **figure 6****,** lequel procédé démarre par une étape 310 au cours de laquelle une image fait l'objet d'une capture ou d'une saisie via le capteur d'image 210.

Puis, dans une étape 320, l'image est transférée via les bus de données et d'adresses du module de commande 100 et le procédé effectue un stockage de ladite image dans une mémoire de stockage comme la mémoire RAM 250 illustrée dans la figure 2.

Puis, dans une étape 330, le procédé effectue un traitement logique de l'image stockée au moyen du processeur d'image 230. Dans un mode de réalisation, chaque image sera traitée séparément de manière à générer une information (ou un signal) de commande 110 destinée au module de puissance 100, ainsi qu'un signal de commande 111 pour l'unité d'affichage 300 (resp. 305) dans le mode de réalisation de la figure 2 (resp. 3) ou pour les commandes respectives des diodes 401 et 403 dans le mode de réalisation des figures 4 et 5. Alternativement, le processeur d'images effectue un traitement collectif ou en lot de plusieurs images stockées en mémoire de manière à générer, périodiquement, une information (ou un signal) de commande destinée au module de puissance 100 et au bloc optique pivotable 300 pour assurer un asservissement de la puissance lumineuse de la lampe ainsi que du faisceau lumineux.

D'une manière générale, l'on pourra envisager de multiples traitements logique et numérique des images saisies.

En particulier, un homme du métier pourra décider d'effectuer un traitement séquentiel des différents pixels composant chacune des images ainsi que celui de ses différentes composantes de couleur, de luminosité, de contraste etc... On pourra envisager un traitement complet sur l'image ou seulement sur une zone particulière (que l'on désignera ci-après sous l'appellation zone spécifique d'asservissement ZSA). En outre, le procédé pourra également comporter un successif de plusieurs images de manière à réaliser une intégration dans le temps des différentes composantes de l'image et d'en déduire une information statistique qui pourra servir à la commande de la puissance lumineuse de la lampe ainsi que du faisceau lumineux.

De manière encore plus sophistiquée, l'on pourra également englober dans le traitement logique et/ou numérique de l'image les algorithmes de reconnaissance de formes et/ou d'objets utiles à la génération d'une information ou d'un signal de commande à destination du module de puissance 100, comme ce que l'on décrira plus particulièrement ci-après.

Au terme de ce traitement d'image effectué dans l'étape 330, le procédé poursuit ensuite, dans une étape 340, par la génération et la transmission de l'information (ou du signal) de commande - ie les signaux 110-111 de la figure 3 et 113-114 des figures 4 et 5 - vers le module de puissance 200, lequel peut alors produire la régulation du flux lumineux et un asservissement de la géométrie du faisceau en fonction du résultat du traitement numérique effectué par le processeur d'image 230.

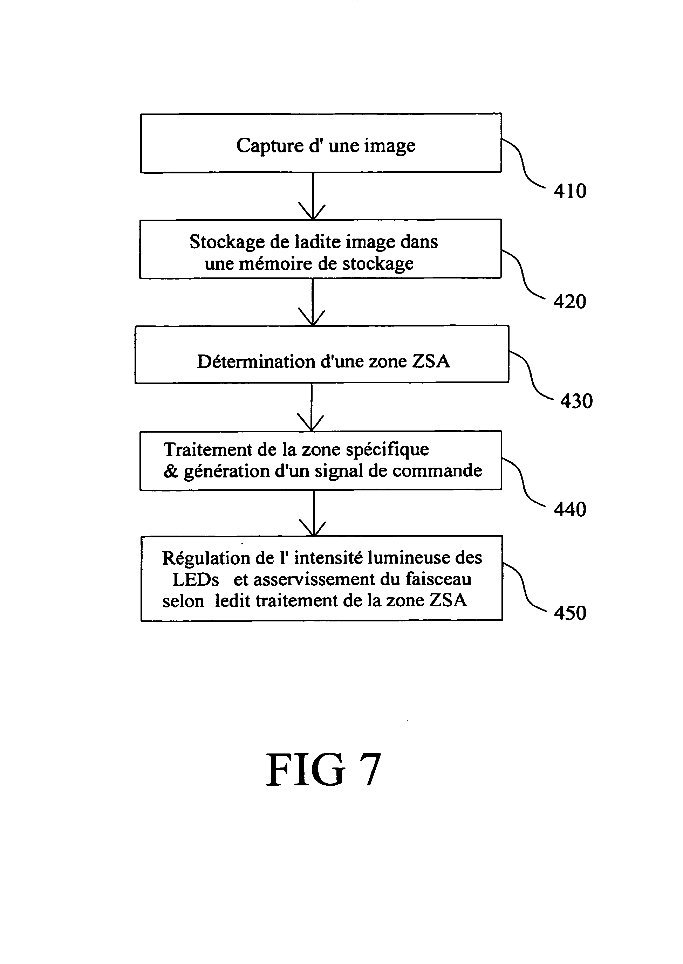

La **figure 7** illustre un second mode de réalisation d' un procédé de commande et/ou de régulation de l'intensité lumineuse des LEDs, dans lequel le processeur d'images ne traite qu'une partie de l'image, définie ci-après sous l'appellation **zone spécifique d'asservissement (ZSA).**

Le procédé démarre par une étape 410 où, le capteur d' image 210 capture une image.

Puis, dans une étape 420, le procédé poursuit par une stockage de ladite image dans une mémoire de stockage comme la mémoire RAM 250.

Puis, dans une étape 430, le procédé poursuit par la détermination d'une zone spécifique d'asservissement (ZSA) de l'image au moyen du processeur d' image 230.

Puis, dans une étape 440, le procédé poursuit par un traitement de ladite zone ZSA au moyen du processeur d'images 230, de manière à générer l'information ou le signal de commande 110-111 (dans la figure 3) ou 113-114 (dans les figures 4 et 5).

Puis, dans une étape 450, le procédé poursuit par la transmission de l'information ou du signal de commande à destination du module de puissance 100 et, dans le cas du mode de réalisation de la figure 3, vers l'unité d'affichage 300 et plus spécialement le système optique commandable 306 - de manière à produire une commande de l'intensité lumineuse des LEDs 401-403 en fonction du résultat du traitement effectué lors de l'étape 440. L'on parvient, de cette manière à asservir la géométrie du faisceau lumineux ainsi que l'intensité lumineuse des LEDs en fonction d'une partie seulement des informations perçues par le capteur d'images, correspondant à la zone ZSA définie dans l'étape 430.

L'on perçoit ainsi la grande souplesse du procédé qui permet de multiples possibilités d'asservissement du faisceau et de régulation de la puissance de la lampe.

L'on décrit à présent plus spécifiquement des modes de réalisation des procédés permettant le calcul de la puissance émise par la lampe, étant entendu que le résultat de tels procédés pourra servir, comme cela a été indiqué, de critère de relèvement du faisceau lumineux.

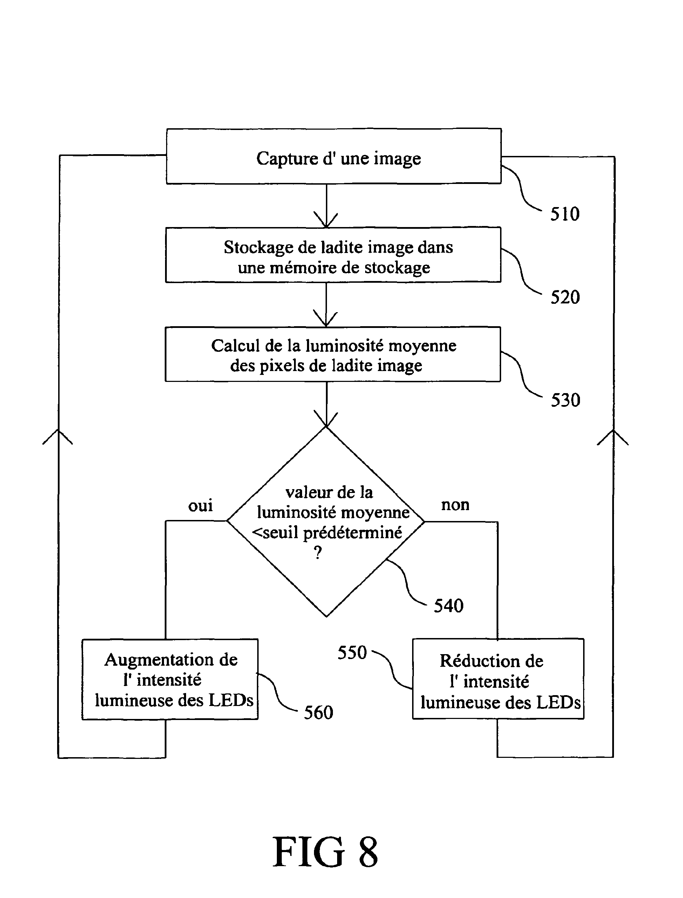

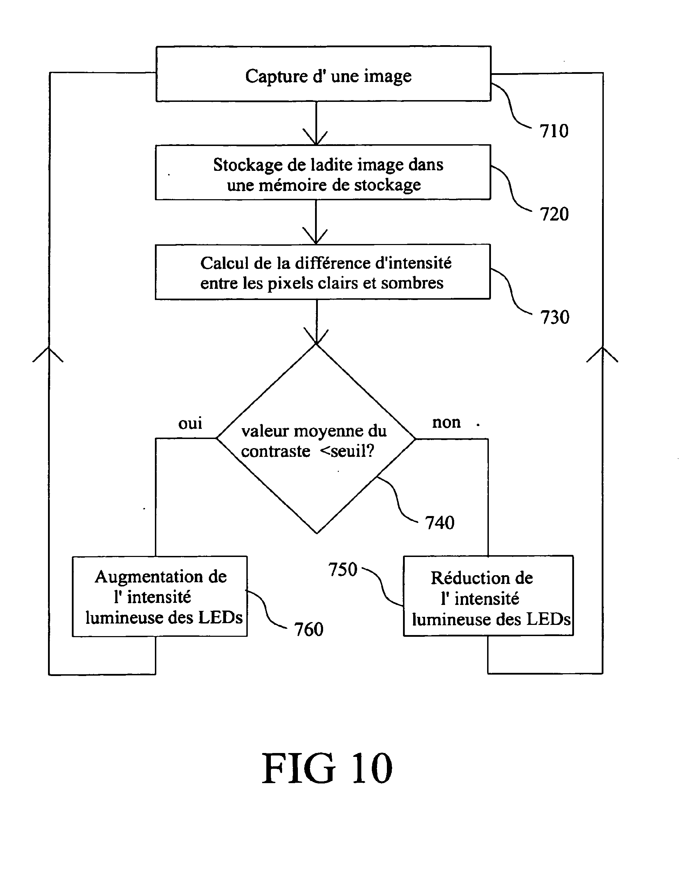

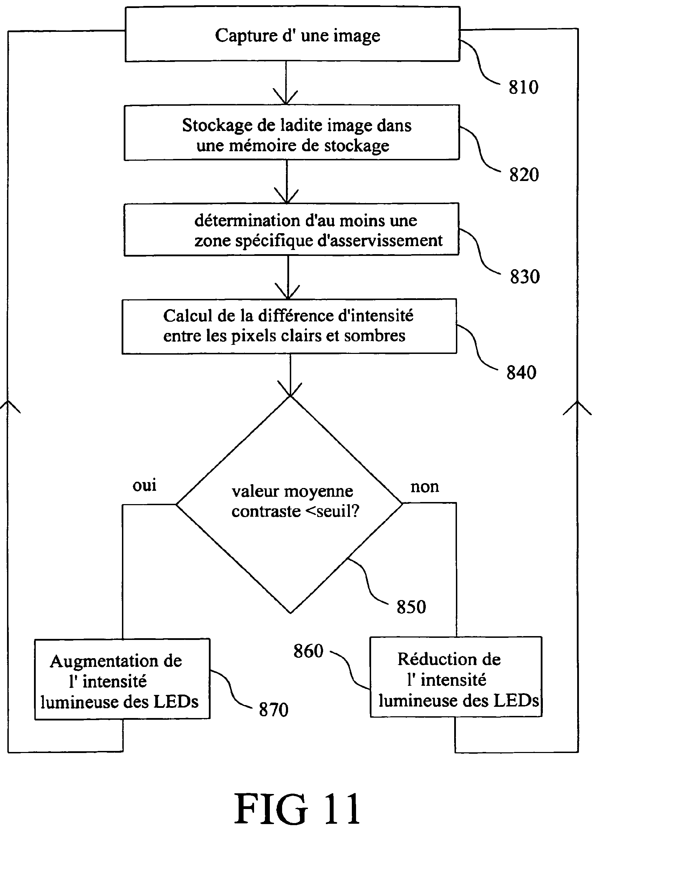

Les figures 8-9 illustrent plus particulièrement des exemples de traitement de la luminosité tandis que les figures 10-11 portent plus spécifiquement sur une analyse du contraste.

Le procédé de la **figure 8** démarre par une étape 510 où, le capteur d'image 210 capture une image.

Puis, dans une étape 520, le procédé poursuit par une stockage de ladite image dans la mémoire de stockage.

Puis, dans une étape 530, le procédé poursuit par un calcul de la luminosité moyenne des pixels de ladite image au moyen du processeur d'image 230.

Puis, dans une étape 540, un test est effectué par le processeur d'image 230, à savoir une comparaison entre la valeur de la luminosité moyenne des pixels de ladite image et une valeur d'un seuil prédéterminé stockée dans la mémoire RAM 240. Dans un mode de réalisation, le seuil prédéterminé est choisi pour correspondre à la sensibilité de l'oeil humain de manière à rendre une régulation aussi naturelle que possible pour un utilisateur moyen.

Lorsque la valeur moyenne de la luminosité excède le seuil prédéterminé, le procédé poursuit avec une étape 550, où une information (ou un signal de commande) est générée et transmis au module de puissance de manière à réduire l'intensité lumineuse générée par les LEDs. Optionnellement cette commande peut être complétée par une commande de la géométrie du faisceau lumineux.

Le procédé retourne ensuite à l'étape 510 où le capteur d'image 210 capture une nouvelle image.

En revanche, lorsque, lors du test de l'étape 540, la valeur de la luminosité moyenne des pixels de ladite image est inférieure que le seuil prédéterminé, le procédé poursuit avec une étape 560 au cours de laquelle ladite unité de commande 240 génère une information ou un signal de commande destiné à augmenter l'intensité lumineuse générée par les LED. Optionnellement , cette commande peut être complétée par une commande de la géométrie du faisceau lumineux.

Le procédé retourne ensuite à l'étape 510 où le capteur d' image 210 capture une nouvelle image.

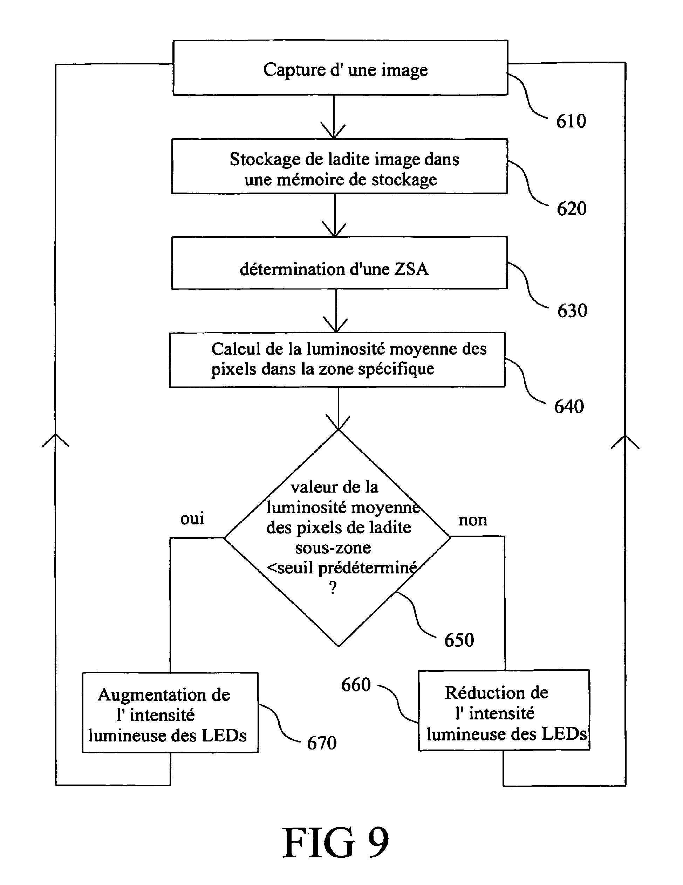

La **figure 9** illustre un mode de réalisation d'un procédé de commande de l'intensité lumineuse de la lampe mettant plus particulièrement en oeuvre une **zone spécifique d'asservissement (ZSA).**

Le procédé démarre par une étape 610 où, le capteur d' image 210 capture une image.

Puis, dans une étape 620, le procédé poursuit par une stockage de ladite image dans une mémoire de stockage comme la mémoire RAM 250 et la mémoire ROM 260 illustrés à la figure 2.

Puis, dans une étape 630, le procédé poursuit par la détermination de la zone spécifique d'asservissement (ZSA) de l'image au moyen du processeur d'images 230.

Puis, dans une étape 640, le procédé poursuit par un calcul de la luminosité moyenne des pixels de ladite zone ZSA de ladite image au moyen du processeur d' image 230.

Puis, dans une étape 650, un test est effectué par le processeur d'images 230, à savoir une comparaison entre la valeur de la luminosité moyenne des pixels de ladite zone ZSA de ladite image et une valeur prédéterminée d'un seuil stocké dans la mémoire.

Puis, dans une étape 660, le procédé poursuit par la génération d'une information ou d'un signal de commande par ladite unité de commande 240 destiné à réduire l'intensité lumineuse générée par les LEDs lorsque la valeur de la luminosité moyenne des pixels de ZSA excède le seuil prédéterminé. Optionnellement cette commande peut être complétée par une commande de la géométrie du faisceau lumineux.

Le procédé retourne ensuite à l'étape 610 où le capteur d' image 210 capture une nouvelle image.

Si, lors du test de l'étape 640, la valeur de la luminosité moyenne des pixels de ladite zone ZSA est inférieure au seuil prédéterminé, le procédé poursuit avec une étape 660 au cours de laquelle est générée une information ou un signal de commande destiné à l'accroissement de l'intensité lumineuse générée par les LEDs. Optionnellement , cette commande peut être complétée par une commande de la géométrie du faisceau lumineux.

Le procédé retourne ensuite à l'étape 610 pour la capture d'une nouvelle image.

Le processeur d'images 230 opère par conséquent un traitement d'images approprié de manière à en dériver une information de commande ou un signal de commande déterminant tant la puissance d'émission des LEDs que la géométrie du faisceau lumineux. En pratique, les variations de luminosité pourront suivre de manière continue ou discrète. Dans les réalisation les plus simples, l'on pourra envisager une modulation simplifiée de la puissance d'émission suivant un certain nombre de paliers permettant une gradation progressive de la puissance, avec des valeurs de 100%, 80%, 60% etc... de la puissance nominale... Dans d'autre réalisations plus sophistiquées, l'on pourra envisager un véritable asservissement d'ordre linéaire permettant une variation continue de la puissance d'émission en fonction de la luminosité moyenne dérivée du traitement d'images.

Au delà du traitement de la seule **luminosité,** le procédé pourra en-outre intégrer un traitement du **contraste** tel que celui qui est illustré en référence à la **figure 10****,** lequel démarre par une étape 710 où, le capteur d'image 210 capture une image.

Puis, dans une étape 720, le procédé poursuit par une stockage de ladite image dans la mémoire de stockage.

Puis, dans une étape 730, le procédé poursuit par un calcul de la différence d'intensité entre les pixels clairs et les pixels sombres au moyen du processeur d'images 230, de manière à générer une information représentative du contraste de l'image, par exemple la valeur moyenne du contraste sur l'ensemble de l'image capturée.

Puis, dans une étape 740, un test est effectué par le processeur d'image, à savoir une comparaison entre la valeur moyenne du contraste et une valeur prédéterminée d'un seuil stocké dans la mémoire.

Lorsque la valeur moyenne du contraste excède le seuil prédéterminé, le procédé poursuit avec une étape 750, où une information ou un signal de commande est généré et transmis au module de puissance 100 de manière à réduire l'intensité lumineuse générée par les LEDs. Optionnellement , cette commande peut être complétée par une commande de la géométrie du faisceau lumineux.

Le procédé retourne ensuite à l'étape 710 pour la capture d'une nouvelle image.

Si, lors du test de l'étape 740, la valeur moyenne du contraste apparaît inférieure au seuil prédéterminé, le procédé poursuit avec une étape 760 au cours de laquelle ladite unité de commande 240 génère une information ou un signal de commande destinée à augmenter l'intensité lumineuse générée par les LED. Optionnellement , cette commande peut être complétée par une commande de la géométrie du faisceau lumineux.

Le procédé retourne ensuite à l'étape 710 pour la capture d'une nouvelle image.

Comme on le voit avec le mode de réalisation de la figure 8, un traitement de contraste peut s'avérer également avantageux pour générer une information utile pour la régulation de la lampe. Un tel traitement permet notamment de déterminer la présence de brouillard, de buée, etc... , autant de situations où il pourra s'avérer opportun d'accroître la luminosité de la lampe mais également de modifier la géométrie du faisceau lumineux, comme par exemple pour relever l'axe du faisceau de cette lampe. D'une manière générale, ce traitement du contraste pourra venir utilement en complément d'autres traitements décrits dans la présente demande de brevet.

La **figure 10** illustre plus particulièrement une réalisation où le calcul du contraste est effectué uniquement sur une **zone spécifique d'asservissement (ZSA)** de l'image, lequel procédé démarre par une étape 810 de capture d'image par le capteur 210.

Puis, dans une étape 820, le procédé poursuit par une stockage de ladite image dans la mémoire de stockage.

Puis, dans une étape 830, le procédé poursuit par la détermination de la zone ZSA au moyen du processeur d'images 230.

Puis, dans une étape 840, le procédé poursuit par un calcul de la différence d'intensité moyenne entre les pixels clairs et sombres de la zone ZSA dans l'étape 830 de manière à générer une information représentative du contraste, par exemple la valeur moyenne de celui-ci.

Puis, dans une étape 850, un test est effectué pour comparer la valeur moyenne du contraste au sein de la zone spécifique avec un seuil prédéterminé.

Lorsque la valeur moyenne du contraste au sein de la zone spécifique excède le seuil prédéterminé, le procédé génère, dans une étape 860, une information ou d'un signal de commande destinée à réduire l'intensité lumineuse générée par les LEDs. Optionnellement , cette commande peut être complétée par une commande de la géométrie du faisceau lumineux.

Le procédé retourne ensuite à l'étape 810 pour la capture d'une nouvelle image.

Au contraire, si, lors du test de l'étape 840, la valeur moyenne du contraste dans la zone ZSA est inférieure que le seuil prédéterminé, le procédé poursuit avec une étape 870 visant à générer une information ou un signal de commande destinée à accroître l'intensité lumineuse générée par les LED. Optionnellement , cette commande peut être complétée par une commande de la géométrie du faisceau lumineux.

Le procédé retourne ensuite à l'étape 810 pour la capture d'une nouvelle image.

Les exemples des figures 8-9 et 10-11 illustrent donc la puissance et la grande flexibilité du procédé d'asservissement et de régulation du faisceau lumineux et de la géométrie de ce faisceau, lequel permettra de s'adapter à de multiples situations dans le but d'accroître la précision de l'asservissement et/ou les fonctionnalités de la lampe.

Dans un mode de réalisation particulier, la zone spécifique ZSA qui est calculée notamment dans les étapes 630 et 830 des figures 8 et 10 est déterminée au moyen d'algorithmes complémentaires visant à détecter des objets ou artefacts bien distincts ou des zones spécifiques au sein de l'image.

Dans un mode de réalisation particulier, un algorithme spécifique mis en oeuvre dans un contexte *d'escalade* ou de *spéléologie* permet d'identifier une bande de sur-exposition approximativement verticale, correspondant à l'empreinte de l'image d'une corde sur le capteur CCD. Le procédé conduit alors, dans les étapes 630 et 830 décrites précédemment, à l'exclusion de la zone ZSA des pixels correspondants à la corde sur-exposée et éviter ainsi de venir perturber le procédé de régulation. Optionnellement , cette commande peut être complétée par un pivotement du faisceau lumineux de manière à rabaisser celui-ci.

Dans un autre mode de réalisation particulier, les étapes 630 et 830 mettent en oeuvre un autre algorithme spécifique identifiant le passage périodique de mains devant le capteur, par exemple lorsque l'utilisateur de la lampe grimpe sur une corde. Dans un tel contexte d'escalade, le traitement d'image effectué par le processeur d'image 230 identifie l'image des mains passant périodiquement devant le capteur et exclut de la zone ZSA les pixels correspondants à ces mains de manière à perturber le moins possible l'asservissement de la lampe. Optionnellement , cette commande peut être complétée par une commande de la géométrie du faisceau lumineux, comme par exemple un pivotement du faisceau lumineux de manière ici également à rabaisser l'axe de ce faisceau.

Les situations d'escalade et/ou de spéléologie ne sont toutefois pas les seules à bénéficier de l'apport significatif résultant du traitement d'images. En effet, dans un autre mode de réalisation qui peut correspondre à une situation plus conventionnelle de "*jogging*" ou de "*randonnée*", le processeur d'images met en oeuvre un algorithme de reconnaissance spécifique d'objets, tels que des phares de voitures ou toute autre source externe de manière, une fois encore, à exclure de la zone ZSA les pixels correspondants à ces mêmes objets.

Dans un autre mode de réalisation, les étapes 630 et 830 mettent en oeuvre un autre algorithme spécifique destiné à l'identification d'artefacts de type "neige" au sein de l'image de manière à exclure les pixels correspondants de la zone ZSA qui, en raison de leur sur-exposition au flux lumineux pourraient venir perturber la régulation de la lampe. Dans un mode de réalisation, lors de la reconnaissance de neige, le procédé procède à la désactivation du système d'asservissement et passe ainsi à un mode statique.

Comme on le voit, les possibilités d'une combinaison d'un capteur imageant avec une commande de la géométrie d'un faisceau lumineux sont particulièrement avantageuses, et un homme du métier pourra adapter l'enseignement de la présente invention à bien des situations pratiques et concrètes.

D'une manière générale, dans un mode de réalisation particulier, afin de rendre plus conviviale l'utilisation du capteur imageant, les algorithmes de détection d'objet et plus généralement le traitement d'images effectué par le processeur 230 sont mis en oeuvre uniquement lors de l'activation d'un paramétrage correspondant à divers **profils** prédéterminés, dont à titre d'illustration un profil "escalade/spéléologie" que l'utilisateur pourra activer ou non préalablement à l'utilisation de la lampe. De manière spécifique, l'activation du profil "spéléologie" pourra être effectué via le port USB 280 ou par tout moyen de communication équivalent.

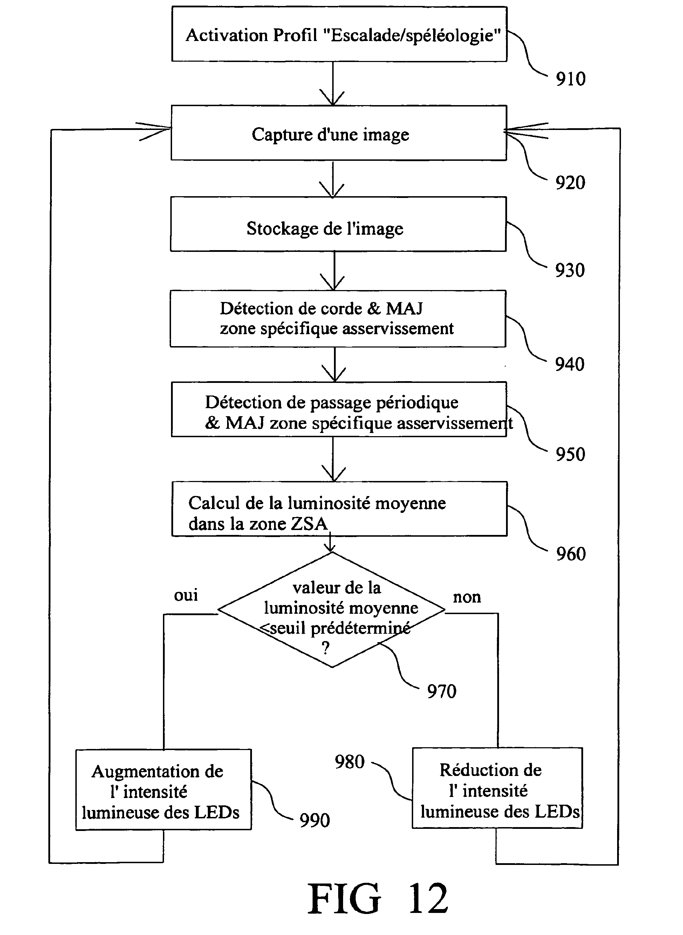

La **figure 12** illustre plus précisément un tel procédé de commande de la lampe, utilisable dans un premier profil, dit d'escalade ou de spéléologie.

Dans une étape 910, le procédé démarre par l'activation du profil correspondant, notamment lors de la configuration de la lampe via un terminal externe (ordinateur portable, téléphone intelligent etc...).

Puis, dans une étape 920 le procédé poursuit par une capture d'image au moyen du capteur d'images 210.

Puis, dans une étape 930, le procédé poursuit par une stockage de ladite image dans la mémoire de stockage.

Puis, dans une étape 940, le procédé poursuit par la mise en oeuvre d'un algorithme de détection de corde visant à identifier, au sein de l'image pixélisée, une bande approximativement verticale de pixels largement sur-exposée. Une fois identifiée, les pixels représentatifs de cette bande sont alors soustraits de la zone spécifique d'asservissement (ZSA) qui est alors mise à jour.

Puis, dans une étape 950 , le procédé poursuit par la mise en oeuvre d'un algorithme opérant un traitement collectif d'images successives de manière à identifier le passage périodique de mains devant le capteur 210. Une fois identifié, les pixels correspondants sont également exclus de la zone ZSA.

Une fois la zone ZSA définie, le procédé poursuit par le calcul, au cours d'une étape 960, de la valeur de la luminosité moyenne au sein de la zone ZSA.

Puis, dans une étape 970, un test est effectué par le processeur d'images de manière à comparer la valeur moyenne de la luminosité par rapport à un seuil prédéterminé (fixé par l'activation du profil déterminé).

Lorsque la valeur moyenne de la luminosité excède le seuil prédéterminé, le procédé poursuit avec une étape 980, où une information ou un signal de commande est généré et transmis au module de puissance de manière à réduire l'intensité lumineuse générée par les LEDs. Optionnellement , cette commande peut être complétée par une commande de la géométrie du faisceau lumineux, comme par exemple un pivotement du faisceau lumineux.

Le procédé retourne ensuite à l'étape 920 pour la capture d'une nouvelle image.

Si, lors du test de l'étape 970, la valeur moyenne du contraste apparaît inférieure au seuil prédéterminé, le procédé poursuit avec une étape 990 au cours de laquelle ladite unité de commande 240 génère une information ou un signal de commande destiné à augmenter l'intensité lumineuse générée par les LED. Optionnellement , cette commande peut être complétée par une commande de la géométrie du faisceau lumineux.

Le procédé retourne ensuite à l'étape 920 pour la capture d'une nouvelle image.

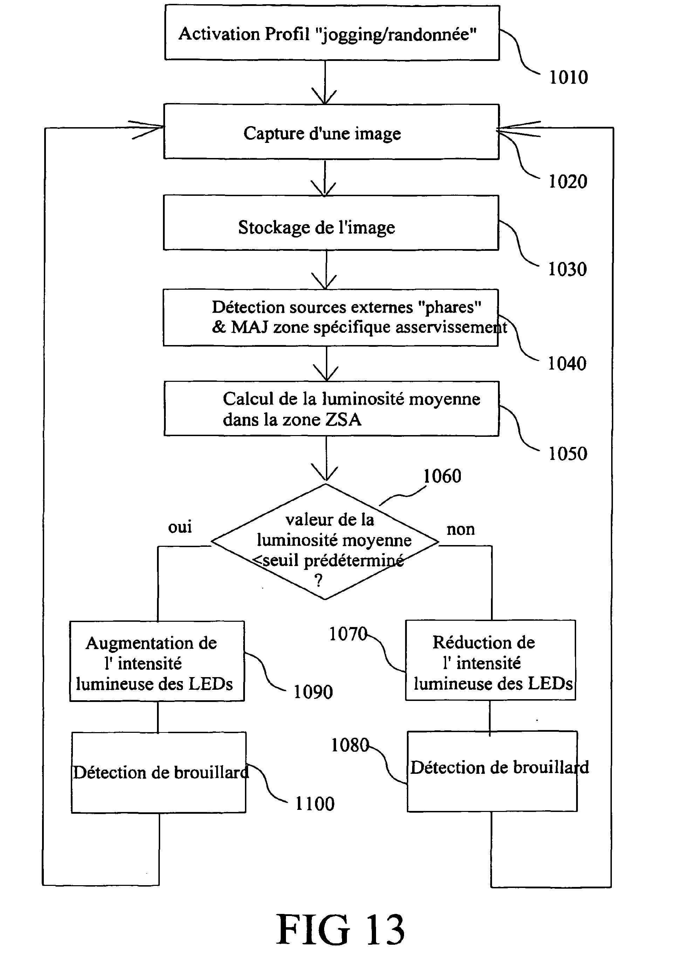

La **figure 13** illustre plus précisément un procédé de commande de la lampe utilisable dans un second profil, de type "*jogginglrandonnée*".

Dans une étape 1010, le procédé démarre par l'activation du profil correspondant qui, comme précédemment, pourra être effectué via un dispositif externe à la lampe, tel qu'un ordinateur, un téléphone intelligent etc...

Puis, dans une étape 1020 le procédé poursuit par une capture d'image au moyen du capteur d'images 210.

Puis, dans une étape 1030, le procédé poursuit par une stockage de ladite image dans la mémoire de stockage.

Puis, dans une étape 1040, le procédé poursuit par la mise en oeuvre d'un algorithme de détection de sources externes, comme par exemple des phares de voitures pouvant être identifiés au moyen de la détection de deux disques lumineux au sein de l'image pixélisée. Une fois identifiée, les pixels représentatifs de ces disques sont alors soustraits de la zone spécifique d'asservissement (ZSA) qui est alors mise à jour.

Puis, dans une étape 1050, le procédé poursuit par le calcul de la luminosité moyenne au sein de la zone ZSA.

Puis, dans une étape 1060, un test est effectué par le processeur d'images de manière à comparer la valeur moyenne de la luminosité par rapport à un seuil prédéterminé (fixé par l'activation du profil *jogginglrandonnée"* déterminé).

Lorsque la valeur moyenne de la luminosité excède le seuil prédéterminé, le procédé poursuit avec une étape 1070, où un premier résultat est généré par le processeur d'images visant à réduire la puissance des LEDs. Optionnellement , cette commande peut être complétée par une commande de la géométrie du faisceau lumineux, telle que par exemple un pivotement de celui-ci.

Le procédé poursuit ensuite, au cours d'une étape 1080 par un algorithme de détection de brouillard, notamment basé sur une analyse de contraste telle que décrite précédemment, de manière à venir apporter un élément de correction, positif ou négatif, au premier résultat généré dans l'étape précédente, et produire enfin l'information ou le signal de commande à destination du module de puissance 100. Le procédé retourne ensuite à l'étape 1020 pour la capture d'une nouvelle image.

Si, lors du test de l'étape 1060, la valeur moyenne du contraste apparaît inférieure au seuil prédéterminé, le procédé poursuit avec une étape 1090, où un second résultat est généré par le processeur d'images, visant à accroître la puissance d'émission des LEDs. Optionnellement , cette commande peut être complétée par une commande de la géométrie du faisceau lumineux.

Le procédé poursuit ensuite, au cours d'une étape 1100 par un algorithme de détection de brouillard, similaire à celui de l'étape 1080, de manière à venir apporter un élément de correction, et produire enfin l'information ou le signal de commande à destination du module de puissance 100.

Le procédé retourne ensuite à l'étape 1020 pour la capture d'une nouvelle image.

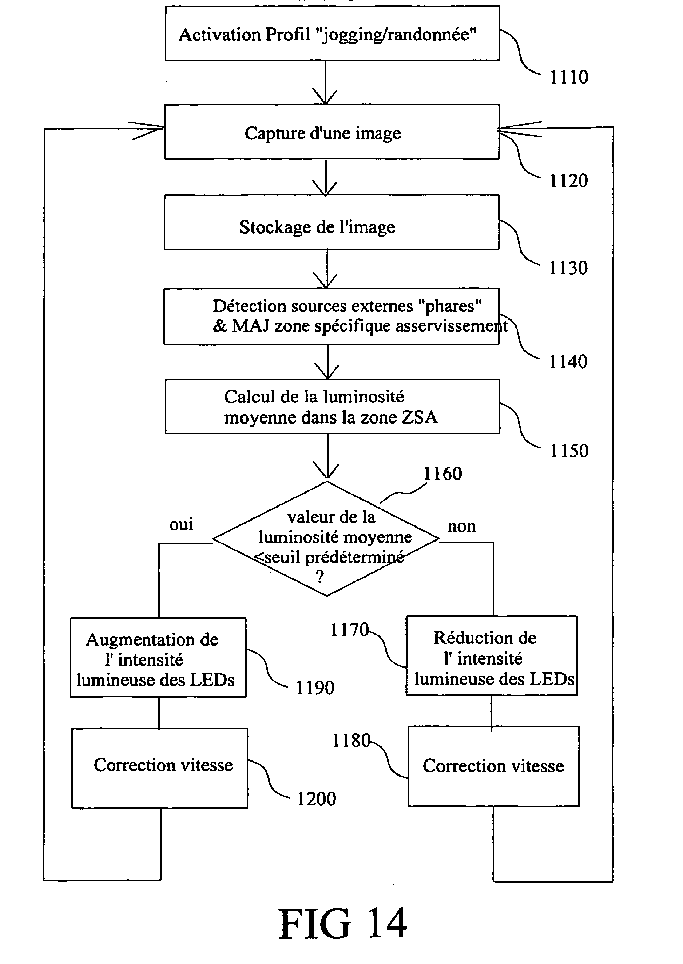

En référence à la **figure 14****,** l'on décrit à présent une variante du procédé de la figure 10 venant intégrer, à la place d'une détection de brouillard/buée, une détection de vitesse destinée à corriger le processus d'asservissement.

En effet, les inventeurs se sont aperçus qu'on pouvait judicieusement améliorer la régulation de la lampe en procédant à un accroissement de la luminosité lorsque le porteur de la lampe est en situation de mouvement, notamment rapide. Au contraire, dans une activité plus statique, le procédé pourra réduire quelque peu la consommation électrique de manière à prolonger la durée de vie de la batterie.

Les étapes 1110 à 1160 correspondent rigoureusement aux étapes 1010 à 1060 et ne seront par conséquent, dans un souci de concision, pas décrits plus avant.

Lorsque, lors du test de l'étape 1160, la valeur moyenne de la luminosité excède le seuil prédéterminé, le procédé poursuit avec une étape 1170, où un premier résultat est généré par le processeur d'images visant à réduire la puissance des LEDs.

Le procédé poursuit ensuite, au cours d'une étape 1180 par un algorithme de détection de vitesse basé sur l'utilisation du capteur 290 ou encore résultant du traitement d'images. Dans l'étape 1180, lorsque le capteur 290 ou l'algorithme mis en oeuvre par le processeur d'images détermine un déplacement significatif de la lampe, le premier résultat généré par le processeur d'images 230 est corrigé par une information supplémentaire visant à introduire un accroissement relatif de la luminosité.

Le procédé retourne ensuite à l'étape 1020 pour la capture d'une nouvelle image.

Si, lors du test de l'étape 1160, la valeur moyenne du contraste apparaît inférieure au seuil prédéterminé, le procédé poursuit avec une étape 1190, où un second résultat est généré par le processeur d'images, visant à accroître la puissance d'émission des LEDs. Optionnellement, le procédé pourra décider d'une commande de la géométrie du faisceau lumineux.

Le procédé poursuit ensuite, au cours d'une étape 1200 par la détection de vitesse visant, comme auparavant dans l'étape 1180, à corriger le second résultat généré par le processeur d'images et produire en fin de compte une information ou une signal de commande à destination du module de puissance 100.

Le procédé retourne ensuite à l'étape 1020 pour la capture d'une nouvelle image.

Les modes de réalisation décrits en référence aux figures 3-11 n'ont d'autre but que d'apporter une démonstration des multiples possibilités qui sont offertes par l'introduction d'un processeur d'images 230 au sein de la lampe frontale (dans l'exemple considéré).

De multiples autres réalisations sont possibles.

En particulier, on pourra combiner l'utilisation de cette lampe avec les avantages résultant de la lampe déjà décrite dans la demande de brevet FR2930706, en disposant en particulier un capteur supplémentaire, distinct du capteur d'images 210, destiné à venir détecter une partie de la lumière réfléchie par le sujet exposé au faisceau lumineux. L'on peut ainsi obtenir une régulation particulièrement rapide de la puissance d'émission des lampes LEDs, tout en combinant celle-ci avec la commande de la géométrie du faisceau qui pourra résulter, elle, du traitement numérique réalisé sur l'image.

On pourra également, et cela en combinaison avec le traitement d'images ou de manière totalement indépendante par rapport à celui-ci, rendre plus effective la détection de brouillard, de fumée ou de buée, et ce au moyen d'un LED infra-roouge (IR) ayant un axe sensiblement désaxé (vers le haut) par rapport à l'axe principal des LEDs de puissance émettant dans le domaine visible.

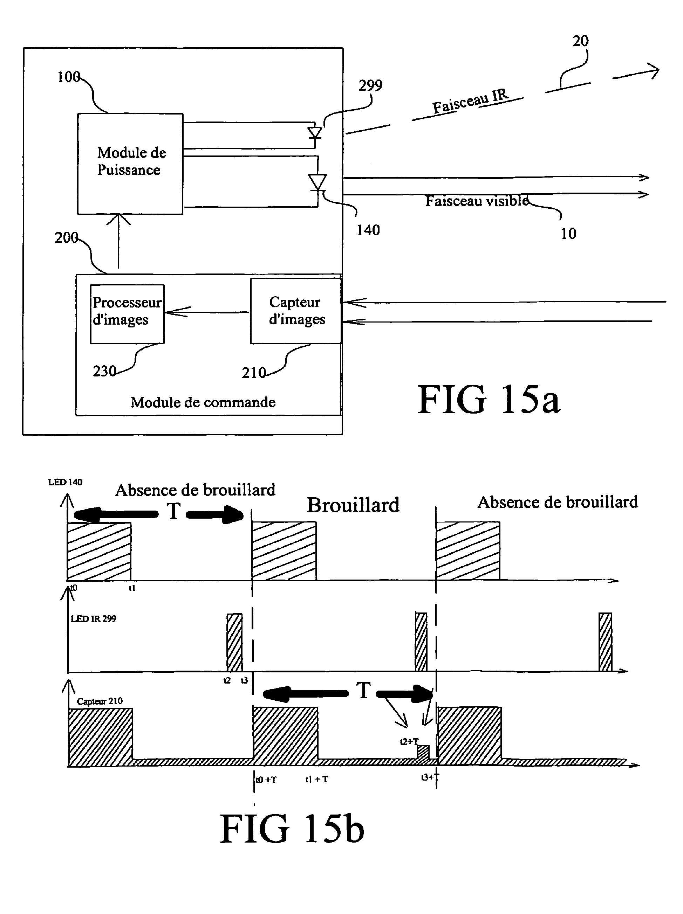

La figure 15a illustre un mode de réalisation de cette lampe qui comporte un module de puissance 100 permettant d'alimenter une ou plusieurs LEDs de puissance (seule la LED 140 étant illustrée) ainsi qu'une LED infra-rouge 299 susceptible de générer un faisceau IR suivant un axe 20 légèrement désaxé par rapport à l'axe 10 supposé horizontal de la LED 140.

Le module de commande 200 comporte, comme dans la réalisation de la figure 2, un capteur d'image 210 générant des images à destination du processeur d'image 230 qui, dans cette réalisation particulière est capable de percevoir une information dans le spectre de l'infrarouge.

L'on décrit à présent la manière d'utiliser le mode de réalisation de la figure 15a, en relation avec les diagrammes temporels de la figure 15b.

La figure 15b illustre, de haut en bas, le signal d'émission de la LED140, le signal d'émission de la LED infra-rouge 299 et une représentation de la luminosité perçue par le capteur d'image 210. La période T du signal PWM est indiqué sur les figures où l'on voit la périodicité des trains de pulses PWM du signal lumineux générés par la LED 140, notamment entre les temps [t₀,t₁], [t₀+T, t₁+T], [t₀+2T, t₁+2T] etc... L'on observe également que le module de puissance (commandé par le module de commande 100) génère également un courant l'alimentation de la diode IR 299 entre les temps [t₂,t_{3]}, [t₂+T, t₃+T], [t₂+2T, t₃+2T] intervenant à un moment où aucune lumière visible n'est transmise par la diode de puissance 140, associé ou non à son optique focale variable.

Le procédé comporte plus spécifiquement les étapes suivantes:
- génération d'une lumière visible via la ou les lampes de puissance Led suivant une modulation MLI;
- génération d'un flux IR hors l'émission de lumière visible;
- capture du signal réfléchi lors de l'émission du flux IR;
- comparaison dudit signal réfléchi avec un seuil prédéterminé et, lorsque le signal réfléchi est supérieur au seuil, détermination de brouillard, de buée ou de particules de fumée.

Le diagramme temporel montre que le signal perçu par le capteur d'image 210, lequel signal fait apparaître un pic [t₂+T, t₃+T] lorsque du brouillard ou de la fumée provoque un réfléchissement partiel de la lumière IR généré par le capteur. De cette manière, le processeur d'image peut discriminer une situation en présence de brouillard ou de particules (buée, fumée) et une situation exempte de brouillard pour commander avantageusement la géométrie du faisceau lumineux, par exemple en venant éclairer plus "bas" à l'instar des phares anti-brouillard présents sur les véhicules automobiles.

L'utilisation d'un tel procédé peut être avantageusement faite lors des étapes 1080 et 1100 des procédés décrits dans la figure 13.

Il est à noter que le diagramme de la figure 15b n'est qu'un premier mode de réalisation particulier. Dans un second mode de réalisation on pourra également envisager la génération, simultanée, d'un flux IR et du flux de lumière visible, en sorte que le capteur d'image percevra indistinctement l'image visible et le pic d'infrarouge réfléchi par la buée et/ou la vapeur d'eau. Dans ce second mode de réalisation, l'on prévoira, au sein du traitement d'images, des moyens de filtrage pour détecter le retour du pic d'infrarouge et détecter la présence de brouillard, de fumée ou de buée

## Revendications

1. Lampe frontale comportant
- une source lumineuse (300) comportant une ou plusieurs diodes de type LED;
- des moyens (100, 110, 111) permettant de commander la géométrie du faisceau lumineux de ladite source lumineuse en réponse à une information ou signal de commande;
- un module de commande (200) destiné à générer ladite information ou ledit signal de commande;
**caractérisée en ce que** ledit module de commande (200) comporte un capteur d'image (210) générant au moins une image de la zone éclairée par ladite source lumineuse et des moyens de traitement (230) de ladite image dans le but de générer ladite information ou ledit signal de commande.

2. Lampe frontale selon la revendication 1 **caractérisée en ce que** la source lumineuse comporte une unité d'affichage comportant au moins deux diodes LED dotées chacune d'un système optique focale propre et dont l'alimentation en courant est commandée par ladite information générée par le traitement d'images.

3. Lampe frontale selon la revendication 1 **caractérisée en ce que** la source lumineuse comporte une ou plusieurs diodes LED (302) associée à un système optique commandable (306), ledit système optique étant commandée par ladite information ou ledit signal de commande (111).

4. Lampe frontale selon la revendication 1 **caractérisée en ce que** ladite source lumineuse comporte au moins une première LED et une seconde LED légèrement désaxée l'une par rapport à l'autre et dont les courants d'alimentation respectifs sont fonctions de ladite information ou dudit signal de commande.

5. Lampe frontale selon l'une des revendications 1 à 4, **caractérisée en ce que** ledit module de commande (200) comporte également des moyens de détermination de la vitesse, ledit processeur d'images utilisant conjointement le traitement d'images et lesdits moyens de détermination de la vitesse captée de manière à commander la géométrie du faisceau lumineux.

6. Lampe frontale selon l'une des revendications précédentes **caractérisée en ce que** lesdits moyens de traitement (230) déterminent une zone spécifique d'asservissement (ZSA) au sein de ladite image, et faisant l'objet d'un traitement d'images de manière à générer ladite information ou ledit signal de commande.

7. Lampe frontale selon la revendication 1 **caractérisée en ce que** lesdits moyens de traitement (230) comportent un processeur d'images effectuant un calcul de la luminosité moyenne des pixels représentatifs de ladite image à des fins de comparaison à un seuil de manière à générer ladite information ou ledit signal de commande

8. Lampe frontale selon la revendication 1 **caractérisée en ce que** ledit processeur d'images effectue une analyse de contraste sur ladite image dans le but d'une détection de brouillard, de buée et/ou de particules de fumée de manière à générer ladite information ou ledit signal de commande

9. Lampe frontale selon l'une des revendications précédentes dans laquelle les moyens de traitement comporte des moyens de configuration de la lampe, notamment suivant un ou plusieurs profils prédéterminés.

10. Lampe frontale selon la revendication 9 **caractérisée en ce que** ladite configuration est effectuée au moyen d'un port USB permettant la communication avec un ordinateur, une tablette tactile, ou un téléphone intelligent.

## Patentansprüche

1. Stirnlampe mit
- einer Lichtquelle (300) mit einer oder mehreren Leuchtdioden;
- Mittel (100, 110, 111) zur Steuerung der Geometrie des Lichtstrahls der Lichtquelle als Reaktion auf eine Information oder ein Steuersignal;
- ein Steuermodul (200), um besagte Information oder besagtes Steuersignal zu erzeugen; **gekennzeichnet dadurch, dass** besagtes Steuermodul (200) einen Bildsensor (210) umfasst, der mindestens ein Bild des von der Lichtquelle beleuchteten Bereichs erzeugt, und Mittel zur Verarbeitung (230) des Bildes mit dem Ziel, besagte Information oder besagtes Steuersignal zu erzeugen.

2. Stirnlampe nach Anspruch 1, **gekennzeichnet dadurch, dass** die Lichtquelle eine Anzeigeeinheit mit mindestens zwei Leuchtdioden umfasst, von denen jede mit einem eigenen Fokaloptiksystem versehen ist und deren die Versorgung mit Strom von besagter von der Bildverarbeitung erzeugten Information gesteuert wird.

3. Stirnlampe nach Anspruch 1, **gekennzeichnet dadurch, dass** die Lichtquelle eine oder mehrere Leuchtdioden (302) umfasst, verbunden mit einem steuerbaren Optiksystem (306), das durch besagte Information oder besagtes Steuersignal (111) gesteuert wird.

4. Stirnlampe nach Anspruch 1, **gekennzeichnet dadurch, dass** besagte Lichtquelle mindestens eine erste Leuchtdiode und eine zweite Leuchtdiode umfasst, die leicht achsenversetzt zueinander sind und deren Versorgungsströme von besagter Information oder dem Steuersignal abhängen.

5. Stirnlampe nach einem der Ansprüche 1 bis 4, **gekennzeichnet dadurch, dass** das Steuermodul (200) auch Mittel zur Ermittlung der Geschwindigkeit umfasst, wobei der Bildprozessor sowohl die Bildverarbeitung als auch besagte Mittel zur Ermittlung der Geschwindigkeit nutzt, um die Geometrie des Lichtstrahls zu steuern.

6. Stirnlampe nach einem der vorhergehenden Ansprüche **gekennzeichnet dadurch, dass** die Mittel zur Verarbeitung (230) einen spezifische Regelbereich (ZSA) innerhalb des Bildes bestimmen, als Gegenstand einer Bildverarbeitung, um besagte Information oder besagtes Steuersignal zu erzeugen.

7. Stirnlampe nach Anspruch 1, **gekennzeichnet dadurch, dass** besagte Mittel zur Verarbeitung (230) einen Bildprozessor umfassen, der eine Berechnung der durchschnittlichen Helligkeit der für das Bild repräsentativen Pixel im Vergleich zu einem Schwellenwert ausführt, um besagte Information oder besagtes Steuersignal zu erzeugen.

8. Stirnlampe nach Anspruch 1, **gekennzeichnet dadurch, dass** der Bildprozessor eine Kontrastanalyse auf dem Bild durchführt, um Nebel, Dampf und/oder Rauchpartikel zu ermitteln, um besagte Information oder besagtes Steuersignal zu erzeugen.

9. Stirnlampe nach einem der vorhergehenden Ansprüche in welche die Mittel zur Verarbeitung Mittel zur Konfiguration der Lampe umfassen, insbesondere nach einem oder mehreren vorgegebenen Profilen.

10. Stirnlampe nach Anspruch 9, **gekennzeichnet dadurch, dass** besagte Konfiguration mittels eines USB-Anschlusses durchgeführt wird, wodurch die Kommunikation mit einem Computer, einem Touchscreen oder einem Smartphone ermöglicht wird.

## Claims

1. Headlamp comprising :
- a light source (300) comprising one or more LED type diodes ;
- control means (100, 110, 111) for controlling the geometry of the light beam of said light source in response to a control information or a control signal;
- a control unit (200) for generating said control information or said control signal ;
**characterized in that** said control unit (200) comprises a image sensor (210) generating at least one image of the area illuminated by said light source and processing means (230) for processing said image so as to generate said control information or said control signal.

2. Headlamp according to claim 1 **characterized in that** said light source comprise a display unit including at least two LED diodes, each having its focal optical system, and which powering is controlled by said control information or said control signal.

3. Headlamp according to claim 1 **characterized in that** said light source comprises one or more LED diodes (302) associated to a controllable optical system (306), said optical system being controlled by said control information or said control signal (111).

4. Headlamp according to claim 1 **characterized in that** said light source comprises at least a first LED and a second LED, with slightly different axis and which the respective power currents are function of said control information or said control signal.

5. Headlamp according to anyone of claims 1 to 4, **characterized in that** said control module (200) further comprises means for determining the speed, said image processor using both the image processing and said speed determination menas for controlling the geometry of the light beam.

6. Headlamp according to anyone of the precedent claims **characterized in that** said processing means (230) determine a specific control area (SCA) within said image, being subject of the image processing so as to generate said control information or said control signal.

7. Headlamp according to claim 1 **characterized in that** said processing means (230) comprises an image processor performing a computation of the average brightness of the pixels that are representative of said image for purposes of comparison with a threshold in order to generate said control information or said control signal.

8. Headlamp according to claim 1 **characterized in that** said image processor performs a contrast analysis on said image in order to detect fog, mist and / or smoke particles so as to generate said control information or said control signal.

9. Headlamp according to anyone of the precedent claims wherein the processing means comprises means for configuration of the lamp, in particular according to one or more predetermined profiles.

10. Lamp according to claim 9 **characterized in that** said configuration is carried out by means of a USB port for communicating with a computer, a touch pad, or a smart phone.
